# EUROPÄISCHE PATENTSCHRIFT

(11) **EP 3 152 996 B1**
(45) Veröffentlichungstag und Bekanntmachung des Hinweises auf die Patenterteilung: **27.06.2018**
(21) Anmeldenummer: 16401063.9
(22) Anmeldetag: 12.09.2016
(51) Int. Cl.: A01C 17/00

(54) **VERFAHREN ZUR BESTIMMUNG DER VERTEILCHARAKTERISTIK EINER VERTEILMASCHINE**
METHOD FOR DETERMINING THE DISTRIBUTION CHARACTERISTICS OF A DISTRIBUTION MACHINE
PROCÉDÉ DE DÉTERMINATION DES CARACTÉRISTIQUES D'ÉPANDAGE D'UN ÉPANDEUR

(30) Priorität: 06.10.2015 DE 102015116949
(43) Veröffentlichungstag der Anmeldung: 12.04.2017
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Ströbel-Fröschle, Markus, 49124 Georgsmarienhütte (DE); Ruschmeier, Kai, 32547 Bad Oeynhausen (DE)

(56) Entgegenhaltungen:
- EP-A2- 2 777 376
- DE-A1- 19 723 359
- DE-A1-102012 111 144

## Beschreibung

Die Erfindung betrifft ein Verfahren zur Bestimmung der Verteilcharakteristik einer Verteilmaschine gemäß dem Oberbegriff des Patentanspruches 1.

Verteilmaschinen, ausgebildet als Zentrifugalstreuer, welche typischerweise landwirtschaftliches Gut von zumindest vorzugsweise zwei Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:
- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung des Streugutes.
- Die Beschaffenheit des Streugutes (Korngröße, Korngeometrie und Dichte) beeinflusst die Abwurfgeschwindigkeit und die Fluggeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2).

Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218T2, DE 197 23 359 A1). Hierbei ist insbesondere vorgesehen die Massenverteilung des Streugutes während des Verteilprozesses zu detektieren. Um hierbei ein zufriedenstellendes Ergebnis zu erzielen, ist es beispielsweise erforderlich entweder einen Sensor in kleinen Schritten über die Breite des Streubereiches zu bewegen, um die Querverteilung des Streugutes zu bestimmen, was einen großen Zeitaufwand bedeutet. Alternativ können viele Sensoren so angeordnet werden, dass eine Erfassung des gesamten Streubereiches sichergestellt wird.

Zu beachten ist jeweils, dass bei Zweischeibenstreuern ein Überlappungsbereich auftritt, in welchem Streugutpartikel von beiden Streuscheiben ausgebracht werden. Da die Einstellung der Streugutparameter beider Streuscheiben sich auf die Verteilcharakteristik in diesem Überlappungsbereich auswirkt, muss dies bei der Regelung berücksichtigt werden. Weiterhin existiert auch ein Überlappungsbereich direkt am Streuer, wo eine Sensoreinrichtung die Düngerpartikel beider Streuscheiben detektiert. Dies kann zu Abweichungen im Messergebnis führen. Dies gilt umso mehr für Streuer, bei denen die Verteilcharakteristik unter der Annahme einer symmetrischen Verteilung nur mittels Sensoren für eine Streuscheibe gemessen wird.

Das zu lösende Problem des Standes der Technik besteht also darin, dass bei der Bestimmung der Verteilcharakteristik insbesondere des mittleren Abwurfwinkels eines Schleuderstreuers Ungenauigkeiten im Bereich zwischen den Streuscheiben auftreten.

Aufgabe der vorliegenden Erfindung ist es daher, das vorgenannte Problem des Standes der Technik zu lösen und eine verbesserte und genauere Bestimmung der Verteilcharakteristik, insbesondere des mittleren Abwurfwinkels, des Streugutes einer Schleuderscheibe eines Düngerstreuers zu ermitteln.

Dies wird durch ein Verfahren zur Bestimmung der Verteilcharakteristik einer Verteilmaschine gemäß dem Oberbegriff des Patentanspruches 1 erreicht, wobei die Ermittlung und/oder Einstellung des mittleren Abwurfwinkels des Streugutes zumindest einer der Schleuderscheiben unter Berücksichtigung des Überlappungsbereiches des Streufächers mit dem Streufächer der jeweils anderen Schleuderscheibe durchgeführt wird. Auf diese Weise lässt sich durch Berücksichtigung der Streugutpartikel der jeweils anderen Schleuderscheibe, welche in den Messbereich der Sensoren eindringen eine verbesserte Bestimmung der Verteilcharakteristik, insbesondere des mittleren Abwurfwinkels der Streugutpartikel erreichen.

In einer Weiterbildung der Erfindung detektiert die Gesamtheit der zumindest einen Sensorvorrichtungen den Bereich des Streufächers, welcher zumindest überwiegend durch das Streuverhalten einer ersten der beiden Schleuderscheiben bestimmt wird.

In einer Weiterbildung der Erfindung wird der mittlere Abwurfwinkel und/oder die räumliche Masseverteilung der zweiten Schleuderscheibe unter Annahme eines symmetrischen Streuverhaltens der zweiten Schleuderscheibe zur ersten Schleuderscheibe unter Berücksichtigung der Einstellparameter beider Schleuderscheiben, wie Aufgabepunkt und/oder Schleuderscheibendrehzahl und/oder Nutzung einer Grenzstreueinrichtung und/oder Schleuderschaufelgeometrie und/oder Aufgabemenge, und/oder äußerer Einflüsse, wie Geländeneigung und/oder Windverhältnisse, ermittelt und/oder auf Basis des ermittelten mittleren Abwurfwinkels zumindest einer der Einstellparameter zur Erzielung des gewünschten mittleren Abwurfwinkels der mit der zweiten Schleuderscheibe abgeworfenen Streugutpartikel eingestellt und/oder der ermittelte mittlere Abwurfwinkel der zweiten Schleuderscheibe auf einer geeigneten Anzeigeeinrichtung dem Fahrer der Verteilmaschine angezeigt. Auf diese Weise kann vorteilhaft unter Berücksichtigung des Überlappungsbereiches der Streuscheiben und unter der Annahme, dass die Verteilcharakteristik der Streuscheiben symmetrisch ist, die Verteilcharakteristik der zweiten Streuscheibe, besonders einfach und präzise eingestellt werden. Hierbei ist in der Regel eine Spiegelsymmetrie des Streuverhaltens relativ zu einer Achse durch das Zentrum der Verteilmaschine in Fahrtrichtung anzunehmen. Äußere Einflüsse, wie Wind oder Geländeneigung, abweichende Einstellungen der jeweiligen Streuscheibenparameter oder auch abweichendes Streuverhalten der Streuscheiben können jedoch auch dazu führen, dass die zu erwartende Symmetrie nicht beobachtet werden kann.

In einer vorteilhaften Weiterbildung der Erfindung wird eine Korrekturgröße zur Berücksichtigung des Einflusses der Geländeneigung auf das Flugverhalten und/oder der Geländeneigung auf den Aufgabepunkt des Streugutes auf die Schleuderscheibe in die Ermittlung und/oder Steuerung des mittleren Abwurfwinkels integriert. Hierdurch können Effekte, die das Streubild und damit auch die Verteilung im Überlappungsbereich der zumindest zwei Streuscheiben in der Regel asymmetrisch beeinflussen in vorteilhafter Weise für die Bestimmung der Verteilcharakteristik und die Wahl der Einstellparameter berücksichtigt werden.

In einer alternativen Ausgestaltung der Erfindung sind zumindest ein erster Sensor zur Detektion eines ersten Bereichs, welcher zumindest überwiegend durch das Streuverhalten der ersten Schleuderscheibe definiert wird, und zumindest ein zweiter Sensor zur Detektion eines zweiten Bereichs, welcher zumindest überwiegend durch das Streuverhalten der zweiten Schleuderscheibe definiert wird, an der Verteilmaschine angeordnet. Hierdurch kann eine präzisere Bestimmung der Verteilcharakteristik, insbesondere des mittleren Abwurfwinkels der Schleuderscheiben erfolgen. Insbesondere können hierdurch Effekte, die das Streubild asymmetrisch beeinflussen bei der Bestimmung der Verteilcharakteristik unberücksichtigt bleiben, da die Effekte direkt durch die Sensoren an den zumindest zwei Streuscheiben bestimmt werden. Auch vorrichtungsbedingte Änderungen der Streucharakteristik, beispielsweise hervorgerufen durch einseitige Nutzung von Grenzstreuschirmen oder bei möglicher Wahl verschiedener Schleuderschaufeln werden direkt bestimmt und einbezogen und müssen nicht algorithmisch berechnet werden.

In einer vorteilhaften Ausgestaltung der Erfindung wird für die gleichzeitige Einstellung des Abwurfwinkels der beiden Schleuderscheiben eine Korrekturgröße berücksichtigt, welche mittels Differenzbildung der mittleren Abwurfwinkel der beiden Schleuderscheiben und zumindest eines Vorfaktors erzeugt wird und einem potentiellen Aufschwingen der Einstellung des mittleren Abwurfwinkels zumindest einer der beiden Schleuderscheiben entgegenwirkt. Hierdurch wird eine möglichst Fehler unanfällige Einstellung der Einstellparameter der Streuscheiben ermöglicht. Andernfalls könnte es zu einem Aufschwingen der Regelung der Verteilcharakteristik kommen, da die Messergebnisse der Sensoren der Partikel im Überlappungsbereich sich sowohl durch Änderungen der Einstellparameter der ersten als auch der zweiten Schleuderscheibe ergibt.

In einer vorteilhaften Weiterbildung der Erfindung wird die Masseverteilung innerhalb des Überlappungsbereiches der beiden Streuteller anteilig den jeweiligen Streuscheiben zugeordnet. Somit kann in vorteilhafter Weise die Verteilcharakteristik, insbesondere der mittlere Abwurfwinkel der Streuscheiben individuell bestimmt werden. Dies kann bei asymmetrischer Einstellung der Einstellparameter der Streuscheiben und/oder asymmetrischem Streubild durch Auftreten von asymmetrischen Effekten wie Wind beispielsweise durch Verwendung entsprechender Formeln, Tabellen und/oder Graphen in vorteilhafter Weise erreicht werden.

Die Ableitung dieser Formeln, Tabellen und/oder Graphen kann in vorteilhafter Weise durch einen einseitigen Test des Streuverhaltens der Verteilmaschine, also bei Ausschalten der Streumenge und/oder des jeweils anderen Streutellers, ermittelt werden. Dabei wird der Einfluss der jeweils anderen Streuscheibe auf den Überlappungsbereich durch Abschalten der Verteilung dieser Streuscheibe ausgeschaltet.

In einer alternativen Ausgestaltung der Erfindung wird die anteilige Zuordnung der Masseverteilung einer und/oder beider Streuscheiben innerhalb des Überlappungsbereiches durch Messen der Masseverteilung außerhalb des Überlappungsbereiches bei verschiedenen Streuparametern und Extrapolation der Masseverteilung in den Überlappungsbereich hinein unter Berücksichtigung der gesamten durch beide Streuscheiben versursachten Masseverteilung im Überlappungsbereich ermittelt.

In einer vorteilhaften Ausgestaltung werden die Anteile der durch die erste und/oder die zweite Streuscheibe abgeworfenen Streugutpartikel in den Messbereich zumindest eines Sensors bestimmt, indem aus dem Dopplersignal des durch zumindest einen Sensor bestimmten Messsignals zumindest ein Geschwindigkeitssignal bezogen auf die Flugrichtung der Sensorsignale aus dem Messsignal extrahiert wird. Hierdurch kann in vorteilhafter Weise der Herkunftsort von sich örtlich nah beieinander befindlicher Partikel bestimmt werden, da das Dopplersignal dieser Partikel über den Ursprungsort Auskunft gibt. Hierbei ist es unerheblich, dass auch die von einer Streuscheibe abgeworfenen Partikel nicht in exakt die gleiche Richtung fliegen. Da die Flugrichtung der Streugutpartikel zumindest im Messbereich stark unterschiedlich ist, sofern sie von verschiedenen Streuscheiben abgeworfen wurden, lässt sich hieraus zumindest bestimmen welcher Mengenanteil der gemessenen Partikel von welcher Streuscheibe abgeworfen wurde.

In einer vorteilhaften Weiterbildung der Erfindung wird mittels eines Vergleichs zumindest zweier Datensätze von zwei räumlich getrennten Sensoren die Geschwindigkeit der Streugutpartikel mittels des Dopplereffektes bezogen auf die Sensorposition ermittelt und durch Kombination dieser Datensätze die Geschwindigkeit der Streugutpartikel relativ zur Fahrtrichtung und senkrecht zur Fahrtrichtung ermittelt und/oder aus diesen Daten der Abwurfort der Streugutpartikel jeweils bestimmt. Hierdurch kann die Geschwindigkeit und Bewegungsrichtung der Streugutpartikel bestimmt werden und sowohl der Abwurfort, als auch der voraussichtliche Auftreffpunkt auf der landwirtschaftlichen Fläche ermittelt werden.

Weitere Einzelheiten der Erfindung sind der Beispielsbeschreibung und den Zeichnungen zu entnehmen. Hierbei zeigen
- Fig. 1: eine schematische Darstellung eines Schleuderstreuers mit zwei Schleuderscheiben und dem korrigierten mittleren Abwurfwinkel,
- Fig. 2: schematische Darstellung der Messung der Geschwindigkeit, welches von der ersten Schleuderscheibe abgeworfen wurde,
- Fig. 3: schematische Darstellung der Messung der Geschwindigkeit, welches von der zweiten Schleuderscheibe abgeworfen wurde.

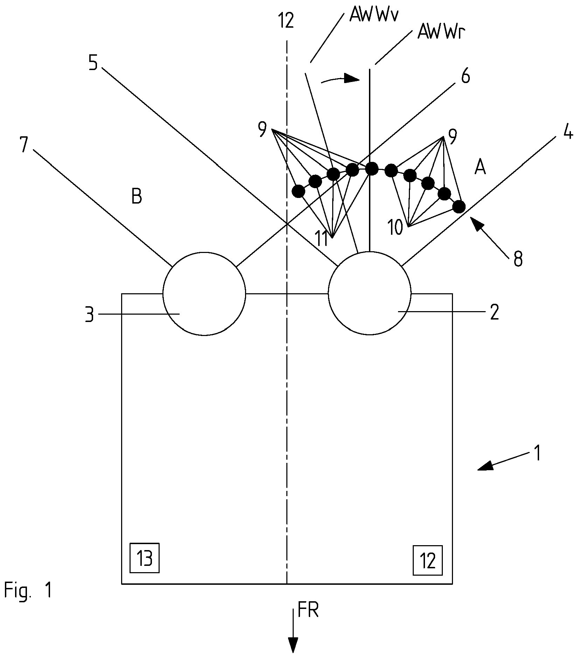

Das erfindungsgemäße Verfahren sowie mögliche bevorzugte Ausgestaltungen einer erfindungsgemäßen Verteilmaschine werden in schematischer Darstellung in den Fig. 1 bis 3 dargestellt. Der Klarheit wegen wurden konstruktive Details, welche für die Darstellung der Erfindung unerheblich, für das Funktionieren der Verteilmaschine aber unerlässlich sind, weggelassen.

In schematischer Darstellung ist in Fig. 1 ein Schleuderstreuer 1 mit einer ersten Schleuderscheibe 2 und einer zweiten Schleuderscheibe 3 dargestellt. Die mittels der Streuscheiben zu verteilenden Partikel werden aus einem nicht dargestellten Vorratstank jeweils mittels eines bekannten und daher ebenfalls nicht dargestellten Einleitsystems auf die Schleuderscheiben aufgebracht. Das Einleitsystem kann in seiner Position in radialer und auch in Umfangsrichtung relativ zum jeweiligen Mittelpunkt der Streuscheibe beweglich ausgestaltet und elektronisch steuerbar sein.

Die radial orientierten Grenzen des Abwurfbereiches A der ersten Schleuderscheibe der jeweiligen Schleuderscheibe sind mittels der Linien 4 und 5, die des Abwurfbereiches B der zweiten Schleuderscheibe mittels der Linien 6 und 7 dargestellt. Der Streufächer der jeweiligen Schleuderscheibe wird also zumindest annähernd in radialer Richtung durch die entsprechenden Linien 4 und 5 bzw. 6 und 7 begrenzt.

Die durch die erste Scheibe 2 ausgebrachten Partikel werden mittels einer Messvorrichtung 8 detektiert. Die Messvorrichtung besteht in diesem Ausführungsbeispiel aus mehreren Sensoren 9, welche einen gewissen Abschnitt des Bereiches A in Umfangsrichtung erfassen. Es kann sich um einen oder mehrere Sensoren handeln. Die Sensoren können beispielsweise als Ultraschall, Radarsensoren oder optische Sensoren ausgebildet und stationär oder beweglich angebracht sein. Die Messsignale werden von einer Steuereinheit 10 erfasst und verarbeitet. In Reaktion auf die Messsignale können von der Steuereinheit Signale zur Ansteuerung der Streuscheiben und/oder zur Veränderung des Aufgabepunktes des Streugutes auf die Streuscheiben ermittelt und ausgegeben werden. Auch können die Daten der Messvorrichtung 8 verarbeitet und einer Bedienperson, beispielsweise in der Kabine eines den Schleuderstreuer ziehenden Traktors, zur Anzeige gebracht werden.

Der überwiegende Teil der durch die zweite Scheibe 3 ausgebrachten Partikel verbleibt auf der entgegen der Fahrtrichtung FR betrachtet linken Seite der Mittellinie 12 und erreicht somit nicht den Messbereich der Messvorrichtung 8. Ein beträchtlicher Teil wird jedoch über die Mittellinie hinweggeworfen und insbesondere diejenigen, welche entlang oder in der Nähe der Begrenzungslinie 6 von der zweiten Schluderscheibe 3 abgeworfen werden fliegen sehr weit in den Abwurfbereich der ersten Schleuderscheibe A. Von diesen von der Scheibe 3 in den Bereich A geworfenen Partikeln passiert zumindest der überwiegende Teil auch die Messvorrichtung 8. Hierdurch ergibt sich das Problem, dass die durch die Streuscheibe 3 in den Bereich A abgeworfenen und durch die Messvorrichtung 8 detektierten Partikel die Präzision der Erfassung der Düngerverteilung und/oder des mittleren Abwurfwinkels durch die Messvorrichtung 8 negativ beeinflussen. Sofern keine Maßnahmen zur Unterscheidung der von der jeweiligen Streuscheibe ausgebrachten Partikel getroffen werden ergibt sich somit ein unkorrekter, virtueller Abwurfwinkel AWWv. Durch geeignet Maßnahmen lässt sich jedoch der reale Abwurfwinkel AWWr der durch die erste Streuscheibe 2 abgeworfenen Partikel ermitteln.

Hierzu kann die Abwurfcharakteristik der ersten Streuscheibe bei ausgeschalteter zweiter Streuscheibe für bestimmte Streuparameter kalibriert werden. Letztere können beispielsweise die Aufgabeposition des Streugutes auf die Streuscheibe, die Art des Streugutes sowie Typ und Drehzahl der Streuscheibe sein. Mittels dieser Informationen lässt sich das Streuverhalten der Streuscheibe für ganz unterschiedliche Bedingungen vorhersagen und entsprechend auch das Streuverhalten in den Überlappungsbereich der beiden Bereich A und B durch die beiden Streuscheiben ermitteln. Bei bekannten Streuparametern und unter Berücksichtigung der Messdaten der Messvorrichtung 8 lässt sich somit für den jeweiligen Bereich A und B zumindest näherungsweise ermitteln welcher Anteil der dort ausgestreuten Partikel durch die erste und welche durch die zweite Streuscheibe ausgebracht wurde.

Alternativ oder zusätzlich kann eine Bestimmung der durch die zweite Streuscheibe in den Bereich A hineingeschleuderten Partikel mittels Extrapolation des Signals derjenigen Sensoren 9 der Messvorrichtung 8, für die eine Detektion von Partikeln der zweiten Streuscheibe 3 ausgeschlossen werden kann, ermittelt werden. Der Anteil der Sensoren 9 der Messvorrichtung 8, für welche davon auszugehen ist, dass ebenfalls Streugutpartikel von der zweiten Schleuderscheibe 3 detektiert werden, sind in der Fig. 1 mit Bezugsziffer 11 bezeichnet, während der Anteil der Sensoren 9 der Messvorrichtung 8, für welche eine Detektion von Streugutpartikeln der Streuscheibe 3 ausgeschlossen werden kann mit der Bezugsziffer 10 bezeichnet sind. Da durch Testmessungen bekannt ist, wie die Verteilcharakteristik einer Streuscheibe bei verschiedenen Streuparametern aussieht, kann durch Extrapolation der Signale der Sensoren 10 ein Korrektursignal für die Sensoren 11 erzeugt werden, welches um das durch die zweite Streuscheibe 3 erzeugte Signal bereinigt wurde.

Es ist natürlich vollkommen denkbar zur Erhöhung der Präzision der Bestimmung der Verteilcharakteristik eine zweite Messvorrichtung vorzusehen, welche an der zweiten Streuscheibe 3 angeordnet ist und das durch diese abgegebene Streugut erfasst. Für den Fall, dass die Steuervorrichtung 12 die Einstellparameter der Streuscheiben 2 und 3 auf der Basis der Messdaten der ersten und zweiten Messvorrichtung vornimmt, ist es notwendig in diesem Fall eine Korrekturgröße in der Regelung vorzunehmen, welche dem Überlapp der Streubereiche Rechnung trägt. Der Grund ist, dass eine Veränderung der Einstellparameter der ersten Streuscheibe 2 auch die Messungen der zweiten Messvorrichtung beeinflusst, da die erste Streuscheibe ja ebenfalls Streugut in den Messbereich der zweiten Messvorrichtung hineinschleudert und umgekehrt, so dass es zu einem Aufschwingen in der Regelung der beiden Streuscheiben kommen kann.

Weiterhin besteht auch die Möglichkeit zu detektieren, wie stark die inneren Sensoren 11 auf Dünger von der Streuscheibe 3 reagieren, und dieses in Relation zu den Signalen zu stellen, die Sensoren erzeugen, die der Scheibe 3 zugeordnet sind. Dazu muss wiederum einseitig nur mit der Scheibe 3 gestreut werden und die Daten aller Messsysteme (den Scheiben 2 und 3 zugeordnet) ausgewertet werden. Sind diese Einflüsse bekannt, lassen sie sich beim beidseitigen Streuen durch gegenseitiges Verrechnen herausrechnen.

Weiter ist es vorteilhaft hier Neigungs- und/oder Windsensoren 13 bzw. entsprechende Wetterdaten für die Bestimmung der Verteilcharakteristik der Streuscheiben 2 und 3 zu berücksichtigen und in die Regelung der Streuparameter durch die Steuervorrichtung 12 einzubeziehen. Da eine vorliegende Hangneigung oder ein entsprechender Windeinfluss zu einer asymmetrischen Beeinflussung des Streuverhaltens der Streuscheiben führt ist eine Berücksichtigung eines solchen Signals besonders vorteilhaft.

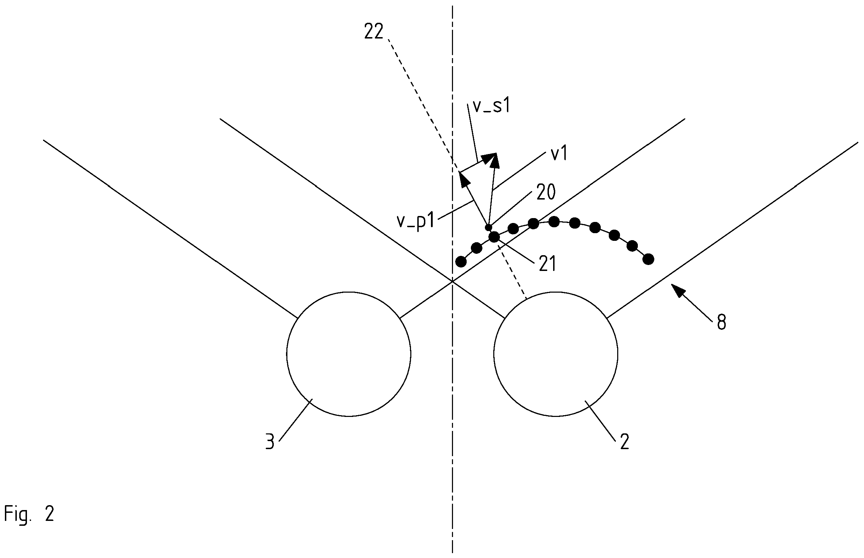

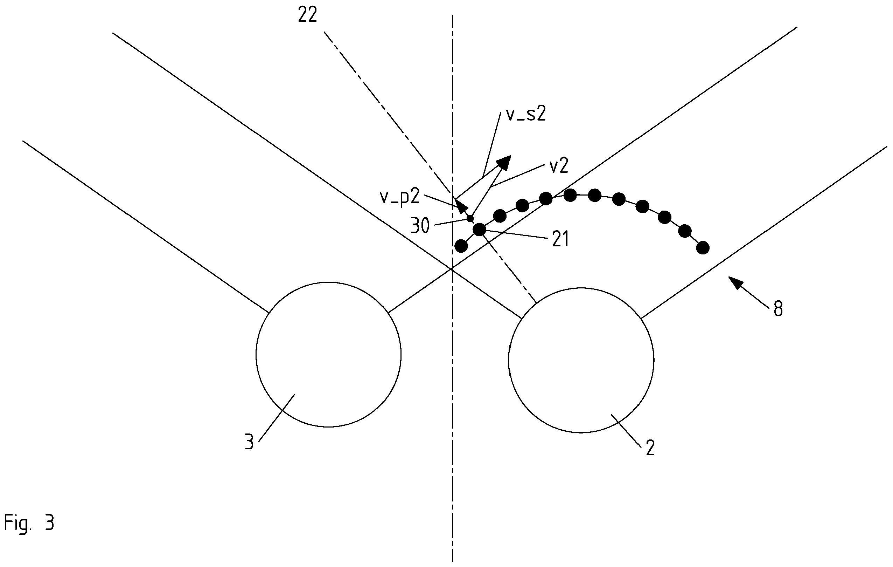

Eine Möglichkeit den Herkunftsort des Streugutpartikels direkt zu bestimmen ist in Fig. 2 und 3 dargestellt. Hierbei wird für ein Streugutpartikel 20 mittels der Messvorrichtung 21 nicht nur der Abstand zwischen Messvorrichtung und Partikel mittels eines Sensorsignals, beispielsweise Radarwellen, bestimmt, sondern auch auf die Komponente der Relativgeschwindigkeit zwischen Sensor und Partikel annähernd parallel zur Ausbreitungsrichtung der Radarwellen v_p1 entlang der Linie 22 geschlossen. Um den Abwurfort des Partikels zu detektieren müsste nun für denselben Partikel eine weitere Messung durchgeführt werden, beispielsweise durch einen benachbarten Sensor oder durch den gleichen Sensor zu einem anderen Zeitpunkt, um auf die Geschwindigkeitskomponente v_s1 senkrecht zu v_p1 schließen zu können.

Selbst wenn dies nicht durchgeführt würde, ließe sich aus dem Signal v_p1 allein jedoch bereits ermitteln, durch welche der Streuscheiben der Partikel 20 abgeworfen wurde. Dies kann erreicht werden, indem die Geschwindigkeit v_p1 mit einer mittleren über alle Partikel gemittelten Geschwindigkeit v_g verglichen wird. Für die Geschwindigkeitsverteilung aller abgeworfener Partikel ist beispielsweise eine Gaussverteilung anzunehmen, deren charakteristische Form mittels Testmessungen in Abhängigkeit von verschiedenen Streuparametern, wie Schleuderschiebentyp und Düngerart bestimmt werden kann. Nimmt man näherungsweise an, dass alle Düngerpartikel mit derselben Geschwindigkeit v_g, abgeworfen werden, welche sich aus den Signalen der Messvorrichtung 8 ermitteln lässt, so ist die Geschwindigkeit v1 des Partikels 20 gleich der mittleren Geschwindigkeit v_g. Daraus lässt sich wiederum bestimmen, welcher Anteil der Geschwindigkeit v1 durch die Geschwindigkeitskomponente v_p1 bedingt ist und damit ob der Partikel 20 von der ersten Streuscheibe 2 oder der zweiten Streuscheibe 3 abgeworfen wurde.

Fig. 3 zeigt den Fall für einen von der zweiten Streuscheibe 3 abgeworfenen Partikel 30, dessen Bewegungsrichtung und Geschwindigkeit durch den Vektor v2 gegeben ist. Der Partikel 30 wird durch die Messvorrichtung 21 detektiert und besitzt lediglich eine sehr kleine Geschwindigkeitskomponente v_p2 parallel zur Linie 22. Eine Charakterisierung der gemessenen Partikel könnte nun derart erfolgen, dass diejenigen Partikel, welche über eine Geschwindigkeitskomponente verfügen, welche relativ zur Durchschnittsgeschwindigkeit v_g aller detektierter Partikel einen bestimmten Schwellwert S unterschreiten der zweiten Schleuderscheibe zugeordnet werden: v_p1/v_g < S. Hierbei wird sich der Wert S typischerweise zwischen 0 und 0.6 bewegen.

## Patentansprüche

1. Verfahren zur Ermittlung und/oder Einstellung des mittleren Abwurfwinkels und/oder der räumlichen Masseverteilung der Partikel eines Streugutes, vorzugsweise Düngers, abgeworfen mittels der Wurfschaufeln rotierend angetriebener Schleuderscheiben einer landwirtschaftlichen Verteilmaschine (1), welche über zwei Schleuderscheiben (2, 3) und jeweils zumindest eine Vorrichtung zur Positionierung des Aufgabepunktes der Partikel des Streugutes auf die jeweilige Schleuderscheibe und zumindest eine elektromagnetische Wellen oder Schallwellen aussendende und empfangende Sensorvorrichtung (8), vorzugsweise mindestens einen Radarsensor, zur Charakterisierung der Partikelverteilung innerhalb des Streufächers der abgeworfenen Streugutpartikel, vorzugsweise zur Bestimmung des mittleren Abwurfwinkels (AWWr) der Streugutpartikel und/oder Bestimmung der Massenverteilung der Streugutpartikel innerhalb des Streufächers, verfügt, wobei der Abwurfwinkel in Bezug auf die Bewegungsrichtung (FR) der Verteilmaschine in horizontaler Richtung gemessen wird, wobei die Ermittlung und/oder Einstellung des mittleren Abwurfwinkels und/oder der räumlichen Masseverteilung der Partikel des Streugutes jeweils individuell für eine der Schleuderscheiben (2, 3) vorgenommen wird **dadurch gekennzeichnet, dass** die Ermittlung und/oder Einstellung des mittleren Abwurfwinkels (AWWr) des Streugutes und/oder der Massenverteilung der Streugutpartikel innerhalb des Streufächers zumindest einer der Schleuderscheiben unter Berücksichtigung des Überlappungsbereiches des Streufächers mit dem Streufächer der jeweils anderen Schleuderscheibe und unter Berücksichtigung der Streugutpartikel der jeweils anderen Schleuderscheibe, welche in den Messbereich der Sensoren der einen Schleuderscheibe eindringen, durchgeführt wird.

2. Verfahren nach Anspruch 1, **dadurch gekennzeichnet, dass** die Gesamtheit der zumindest einen Sensorvorrichtungen (8) den Bereich des Streufächers detektiert, welcher zumindest überwiegend durch das Streuverhalten einer ersten der beiden Schleuderscheiben (2) bestimmt wird.

3. Verfahren nach Anspruch 2, **dadurch gekennzeichnet, dass** der mittlere Abwurfwinkel und/oder die räumliche Masseverteilung der zweiten Schleuderscheibe unter Annahme eines symmetrischen Streuverhaltens der zweiten Schleuderscheibe (3) zur ersten Schleuderscheibe (2) unter Berücksichtigung der Einstellparameter beider Schleuderscheiben, wie Aufgabepunkt und/oder Schleuderscheibendrehzahl und/oder Nutzung einer Grenzstreueinrichtung und/oder Schleuderschaufelgeometrie und/oder Aufgabemenge, und/oder äußerer Einflüsse, wie Geländeneigung und/oder Windverhältnisse, ermittelt und/oder auf Basis des ermittelten mittleren Abwurfwinkels zumindest einer der Einstellparameter zur Erzielung des gewünschten mittleren Abwurfwinkels der mit der zweiten Schleuderscheibe abgeworfenen Streugutpartikel eingestellt wird und/oder der ermittelte mittlere Abwurfwinkel (AWWr) der zweiten Schleuderscheibe auf einer geeigneten Anzeigeeinrichtung dem Fahrer der Verteilmaschine angezeigt wird.

4. Verfahren nach zumindest einem der vorangegangenen Ansprüche, **dadurch gekennzeichnet, dass** eine Korrekturgröße zur Berücksichtigung des Einflusses der Geländeneigung auf das Flugverhalten und/oder der Geländeneigung auf den Aufgabepunkt des Streugutes auf die Schleuderscheibe in die Ermittlung und/oder Steuerung des mittleren Abwurfwinkels (AWWr) integriert wird.

5. Verfahren nach einem der vorangegangenen Ansprüche, **dadurch gekennzeichnet, dass** zumindest ein erster Sensor zur Detektion eines ersten Bereichs, welcher zumindest überwiegend durch das Streuverhalten der ersten Schleuderscheibe (2) definiert wird, und zumindest ein zweiter Sensor zur Detektion eines zweiten Bereichs, welcher zumindest überwiegend durch das Streuverhalten der zweiten Schleuderscheibe (3) definiert wird, an der Verteilmaschine angeordnet sind.

6. Verfahren nach Anspruch 5, **dadurch gekennzeichnet, dass** die gleichzeitige Einstellung des Abwurfwinkels der beiden Schleuderscheiben (2, 3) eine Korrekturgröße berücksichtigt, welche mittels Differenzbildung der mittleren Abwurfwinkel der beiden Schleuderscheiben und zumindest eines Vorfaktors erzeugt wird und einem potentiellen Aufschwingen der Regelung der Einstellung des mittleren Abwurfwinkels zumindest einer der beiden Schleuderscheiben entgegenwirkt.

7. Verfahren nach zumindest einem der vorangegangenen Ansprüche, **dadurch gekennzeichnet, dass** die Masseverteilung innerhalb des Überlappungsbereiches der Verteilzonen (A, B) der beiden Streuscheiben anteilig den jeweiligen Streuscheiben (2, 3) zugeordnet werden.

8. Verfahren nach zumindest einem der vorangegangenen Ansprüche, **dadurch gekennzeichnet, dass** die anteilige Zuordnung der Masseverteilung einer und/oder beider Streuscheiben (2,3) innerhalb des Überlappungsbereiches der Verteilzonen (A, B) durch Ableitung eines funktionalen Zusammenhanges, eines entsprechenden Graphen oder einer Tabelle der Masseverteilung von den Streuparametern mittels eines einseitigen Tests des Streuverhaltens der Verteilmaschine, also bei Ausschalten der Verteilung des jeweils anderen Streuscheibe, ermittelt wird.

9. Verfahren nach zumindest einem der vorangegangenen Ansprüche, **dadurch gekennzeichnet, dass** die anteilige Zuordnung der Masseverteilung einer und/oder beider Streuscheiben innerhalb des Überlappungsbereiches der Verteilzonen (A, B) durch Messen der Masseverteilung außerhalb des Überlappungsbereiches bei verschiedenen Streuparametern und Extrapolation der Masseverteilung in den Überlappungsbereich hinein unter Berücksichtigung der gesamten durch beide Streuscheiben versursachten Masseverteilung im Überlappungsbereich ermittelt wird.

10. Verfahren nach zumindest einem der vorangegangenen Ansprüche, **dadurch gekennzeichnet, dass** die Anteile der durch die erste und/oder die zweite Streuscheibe abgeworfenen Streugutpartikel in den Messbereich zumindest eines Sensors (21) bestimmt werden, indem aus dem Dopplersignal des durch zumindest einen Sensor (21) bestimmten Messsignals zumindest ein Geschwindigkeitssignal (v_p1) bezogen auf die Flugrichtung der Sensorsignale aus dem Messsignal extrahiert wird.

11. Verfahren nach Anspruch 10, **dadurch gekennzeichnet dass** mittels eines Vergleichs zumindest zweier Datensätze von zwei räumlich getrennten Sensoren die Geschwindigkeit der Streugutpartikel mittels des Dopplereffektes bezogen auf die Sensorposition ermittelt und durch Kombination dieser Datensätze die Geschwindigkeit der Streugutpartikel relativ zur Fahrtrichtung und senkrecht zur Fahrtrichtung ermittelt und/oder aus diesen Daten der Abwurfort der Streugutpartikel jeweils bestimmt wird.

## Claims

1. Method for determining and/or setting the average ejection angle and/or the spatial mass distribution of the particles of a spreadable material, preferably a fertilizer, ejected by means of the throwing blades of throwing discs, driven in rotation, of an agricultural distribution machine (1) which has two throwing discs (2, 3) and in each case at least one device for positioning the output point of the particles of the spreadable material onto the respective throwing disc, and at least one sensor device (8), preferably at least one radar sensor, which emits and receives electromagnetic waves or sound waves, for characterizing the particle distribution within the spreading fan of the ejected spreadable material particles, preferably for determining the mean ejection angle (AWWr) of the spreadable material particles and/or for determining the mass distribution of the spreadable material particles within the spreading fan, wherein the ejection angle is measured in the horizontal direction with respect to the movement direction (FR) of the distribution machine, wherein the determination and/or setting of the average ejection angle and/or the spatial mass distribution of the particles of the spreadable material are/is performed in each case individually for one of the throwing discs (2, 3), **characterized in that** the determination and/or the setting of the average ejection angle (AWWr) of spreadable material and/or the mass distribution of the spreadable material particles within the spreading fan of at least one of the throwing discs are/is carried out taking into account the overlapping region of the spreading fan with the spreading fan of the respective other throwing disc and taking into account the spreadable material particles of the respective other throwing disc which penetrate the measuring range of the sensors of the one throwing disc.

2. Method according to Claim 1, **characterized in that** the totality of the at least one sensor device (8) detects the range of the spreading fan which is determined at least predominantly by means of the spreading behaviour of a first of the two throwing discs (2).

3. Method according to Claim 2, **characterized in that** the average ejection angle and/or the spatial mass distribution of the second throwing disc are/is determined assuming a symmetrical spreading of the second throwing disc (3) with respect to the first throwing disc (2) taking into account the setting parameters of the two throwing discs, such as the output point and/or rotational speed of the throwing discs and/or using a limiting spreading device and/or spreading blade geometry and/or output quantity and/or external influences such as the inclination of the land and/or wind conditions, and/or at least one of the setting parameters for achieving the desired average ejection angle of the spreadable material particles ejected with the second throwing disc is set on the basis of the determined average ejection angle, and/or the determined average ejection angle (AWWr) of the second throwing disc is displayed to the driver of the distribution machine on a suitable display device.

4. Method according to at least one of the preceding claims, **characterized in that** a correction variable for taking into account the influence of the inclination of the land on the flying behaviour and/or the inclination of the land on the output point of the spreadable material onto the throwing disc are/is integrated into the determination and/or control of the average ejection angle (AWWr).

5. Method according to one of the preceding claims, **characterized in that** at least a first sensor for detecting a first range which is defined at least predominantly by the spreading behaviour of the first throwing disc (2), and at least a second sensor for detecting a second range which is defined at least predominantly by the spreading behaviour of the second throwing disc (3), are arranged on the distribution machine.

6. Method according to Claim 5, **characterized in that** the simultaneous setting of the ejection angle of the two throwing discs (2, 3) takes into account a correction variable which is generated by forming differences between the average ejection angles of the two throwing discs and at least one prefactor and counteracts a potential sudden increase in the control of the setting of the average ejection angle of at least one of the two throwing discs.

7. Method according to at least one of the preceding claims, **characterized in that** the mass distribution within the overlapping region of the distribution zones (A, B) of the two spreading discs are assigned proportionally to the respective spreading discs (2, 3).

8. Method according to at least one of the preceding claims, **characterized in that** the proportional assignment of the mass distribution of one and/or of both spreading discs (2, 3) within the overlapping region of the distribution zones (A, B) is determined by deriving a functional relationship, a corresponding graph or a table of the mass distribution from the spreading parameters by means of a one-sided test of the spreading behaviour of the distribution machine, that is to say when the distribution of the respective other spreading disc is switched off.

9. Method according to at least one of the preceding claims, **characterized in that** the proportional assignment of the mass distribution of one and/or both spreading discs within the overlapping region of the distribution zones (A, B) is determined by measuring the mass distribution outside the overlapping region for various spreading parameters and extrapolating the mass distribution into the overlapping region taking into account the entire mass distribution in the overlapping region which is caused by both spreading discs.

10. Method according to at least one of the preceding claims, **characterized in that** the proportions of the spreadable material particles which are ejected by the first and/or the second spreading disc into the measuring range of at least one sensor (21) are determined by extracting, from the Doppler signal of the measurement signal determined by at least one sensor (21), at least one speed signal (v_p1) relating to the flying direction of the sensor signals from the measurement signal.

11. Method according to Claim 10, **characterized in that** the speed of the spreadable material particles is determined by means of the Doppler effect relating to the sensor position by means of a comparison of at least two data records of two spatially separate sensors, and the speed of the spreadable material particles relative to the flying direction and perpendicular to the flying direction is determined by combining these data records, and/or the ejection location of the spreadable material particles is respectively determined from these data items.

## Revendications

1. Procédé pour déterminer et/ou régler l'angle d'éjection moyen et/ou la distribution massique spatiale des particules d'un matériau d'épandage, de préférence de l'engrais, éjecté au moyen des pales d'éjection des disques centrifuges entraînés en rotation d'une épandeuse agricole (1), laquelle dispose de deux disques centrifuges (2, 3) et respectivement au moins un dispositif de positionnement du point de chargement des particules du matériau d'épandage sur le disque centrifuge respectif et au moins un dispositif capteur (8) émettant ou recevant une onde électromagnétique ou une onde sonore, de préférence au moins un capteur radar, destiné à caractériser la distribution des particules à l'intérieur de l'éventail d'épandage des particules de matériau d'épandage éjectées, de préférence destiné à définir l'angle d'éjection moyen (AWWr) des particules de matériau d'épandage et/ou définir la distribution massique des particules de matériau d'épandage à l'intérieur de l'éventail d'épandage, l'angle d'éjection étant mesuré en référence au sens de déplacement (FR) de l'épandeuse dans la direction horizontale, la détermination et/ou le réglage de l'angle d'éjection moyen et/ou de la distribution massique spatiale des particules du matériau d'épandage étant respectivement effectués individuellement pour l'un des disques centrifuges (2, 3), **caractérisé en ce que** la détermination et/ou le réglage de l'angle d'éjection moyen (AWWr) du matériau d'épandage et/ou de la distribution massique des particules du matériau d'épandage à l'intérieur de l'éventail d'épandage d'au moins l'un des disques centrifuges sont effectués en tenant compte de la zone de chevauchement de l'éventail d'épandage avec l'éventail d'épandage de l'autre disque centrifuge respectif et en tenant compte des particules du matériau d'épandage de l'autre disque centrifuge respectif qui pénètrent dans la zone de mesure des capteurs dudit disque centrifuge.

2. Procédé selon la revendication 1, **caractérisé en ce que** l'ensemble des au moins un dispositifs capteurs (8) détecte la zone de l'éventail d'épandage qui est définie au moins principalement par le comportement d'épandage d'un premier des deux disques centrifuges (2).

3. Procédé selon la revendication 2, **caractérisé en ce que** l'angle d'éjection moyen et/ou la distribution massique spatiale du deuxième disque centrifuge sont déterminés en supposant un comportement d'épandage symétrique du deuxième disque centrifuge (3) par rapport au premier disque centrifuge (2) en tenant compte des paramètres de réglage des deux disques centrifuges, comme le point de chargement et/ou la vitesse de rotation des disques centrifuge et/ou l'utilisation d'un appareil d'épandage limite et/ou la géométrie des pales et/ou la quantité chargée et/ou des influences externes comme l'inclinaison du terrain et/ou les conditions de vent, et/ou au moins l'un des paramètres de réglage est réglé sur la base de l'angle d'éjection moyen déterminé en vue d'obtenir l'angle d'éjection moyen souhaité des particules de matériau d'épandage éjectées avec le deuxième disque centrifuge et/ou l'angle d'éjection moyen (AWWr) déterminé du deuxième disque centrifuge est affiché sur un appareil d'affichage approprié à l'attention du conducteur de l'épandeuse.

4. Procédé selon au moins l'une des revendications précédentes, **caractérisé en ce qu'**une grandeur de correction destinée à tenir compte de l'influence de l'inclinaison du terrain sur le comportement de vol et/ou de l'inclinaison du terrain sur le point de chargement du matériau d'épandage sur le disque centrifuge est intégrée dans la détermination et/ou la commande de l'angle d'éjection moyen (AWWr).

5. Procédé selon l'une des revendications précédentes, **caractérisé en ce qu'**au moins un premier capteur destiné à détecter une première zone, laquelle est définie au moins principalement par le comportement d'épandage du premier disque centrifuge (2), et au moins un deuxième capteur destiné à détecter une deuxième zone, laquelle est définie au moins principalement par le comportement d'épandage du deuxième disque centrifuge (3), sont disposés sur l'épandeuse.

6. Procédé selon la revendication 5, **caractérisé en ce que** le réglage simultané de l'angle d'éjection des deux disques centrifuges (2, 3) tient compte d'une grandeur de correction qui est générée au moyen du calcul de la différence entre l'angle d'éjection moyen des deux disques centrifuges et au moins un préfacteur et contrecarre une suroscillation potentielle de la régulation du réglage de l'angle d'éjection moyen d'au moins l'un des deux disques centrifuges.

7. Procédé selon au moins l'une des revendications précédentes, **caractérisé en ce que** la distribution massique à l'intérieur de la zone de chevauchement des zones de distribution (A, B) des deux disques d'épandage sont affectées proportionnellement aux disques d'épandage (2, 3) respectifs.

8. Procédé selon au moins l'une des revendications précédentes, **caractérisé en ce que** l'affectation proportionnelle des distributions massiques d'un et/ou des deux disques d'épandage (2, 3) à l'intérieur de la zone de chevauchement des zones de distribution (A, B) est déterminée en dérivant une relation fonctionnelle, un graphique correspondant ou un tableau des distributions massiques des paramètres d'épandage au moyen d'un test unilatéral du comportement d'épandage de l'épandeuse, c'est-à-dire lors de la désactivation de la distribution de l'autre disque d'épandage respectif.

9. Procédé selon au moins l'une des revendications précédentes, **caractérisé en ce que** l'affectation proportionnelle des distributions massiques d'un et/ou des deux disques d'épandage à l'intérieur de la zone de chevauchement des zones de distribution (A, B) est déterminée en mesurant la distribution massique en-dehors de la zone de chevauchement avec différents paramètres d'épandage et par extrapolation de la distribution massique à l'intérieur de la zone de chevauchement en tenant compte de la totalité de la distribution massique provoquée par les deux disques d'épandage dans la zone de chevauchement.

10. Procédé selon au moins l'une des revendications précédentes, **caractérisé en ce que** les proportions des particules de matériau d'épandage éjectées par le premier et/ou le deuxième disque d'épandage dans la plage de mesure d'au moins un capteur (21) sont définies en extrayant du signal de mesure, à partir du signal doppler du signal de mesure défini par l'au moins un capteur (21), au moins un signal de vitesse (v_p1) par rapport à la direction du vol des signaux de capteur.

11. Procédé selon la revendication 10, **caractérisé en ce que** la vitesse des particules de matériau d'épandage est déterminée au moyen d'une comparaison d'au moins deux jeux de données de deux capteurs séparés dans l'espace au moyen de l'effet doppler rapport à la position des capteurs, et la vitesse des particules de matériau d'épandage par rapport au sens de déplacement et perpendiculairement au sens de déplacement est déterminée en combinant ces jeux de données et/ou le lieu d'éjection des particules de matériau d'épandage est respectivement défini à partir de ces données.
